# EUROPEAN PATENT SPECIFICATION

(11) **EP 1 964 353 B1**
(45) Date of publication and mention of the grant of the patent: **02.08.2017**
(21) Application number: 06793221.0
(22) Date of filing: 05.09.2006
(51) Int. Cl.: H04L 29/06, H04L 12/28

(54) **METHOD FOR ESTABLISHING A UNICAST MEDIA SESSION**
VERFAHREN ZUR HERSTELLUNG EINER UNICAST-MEDIENSITZUNG
PROCEDE POUR L'ETABLISSEMENT D'UNE SESSION MULTIMEDIA DE DIFFUSION INDIVIDUELLE

(30) Priority: 19.12.2005 WO PCT/EP2005/056922
(43) Date of publication of application: 03.09.2008
(73) Proprietor: Telefonaktiebolaget LM Ericsson (publ), 164 83 Stockholm (SE)
(72) Inventor: CAGENIUS, Torbjörn, S-19134 Sollentuna (SE); DAMOLA, Ayodele, S-16455 Kista (SE)
(74) Representative: Boco IP Oy Ab
(86) International application number: PCT/EP2006/066008
(87) International publication number: WO 2007/071461

(56) References cited:
- WO-A-02/09387
- MILAN ERBES: "Access Networks Assumptions for TISPAN RACS" ETSI TISPAN, 6 June 2005 (2005-06-06), - 10 June 2005 (2005-06-10) XP002410904 ETSI

## Description

### Technical Field

The present invention relates to a method and apparatus for establishing a unicast media session, preferably but not necessarily utilising a set top box (STB).

### Background

IP Multimedia (IPMM) services provide a dynamic combination of voice, video, messaging, data, etc. within the same session. By growing the numbers of basic applications and the media that it is possible to combine, the number of services offered to the end users will grow, and the inter-personal communication experience will be enriched. This will lead to a new generation of personalised, rich multimedia communication services, including so-called "combinational IP Multimedia" services, which are considered in more detail below.

IP Multimedia Subsystem (IMS) is the technology defined by the Third Generation Partnership Project (3GPP) to provide IP Multimedia services over 3G mobile communication networks (3GPP TS 23.228 and TS 24.229 Release 5 and Release 6). IMS provides key features to enrich the end-user person-to-person communication experience through the integration and interaction of services. IMS allows new rich person-to-person (client-to-client) as well as person-to-content (client-to-server) communications over an IP-based network. The IMS makes use of the Session Initiation Protocol (SIP) to set up and control calls or sessions between user terminals (or user terminals and web servers). The Session Description Protocol (SDP), carried by SIP signalling, is used to describe and negotiate the media components of the session. Other protocols are used for media transmission and control, such as Real-time Transport Protocol and Real-time Transport Control Protocol (RTP/RTCP), Message Session Relay Protocol (MSRP), Hyper Text Transfer Protocol (HTTP).

The boundaries between the services provided by telecommunication operators, TV operators, and internet service providers are disappearing, and such companies are offering customers all three services (so called "triple play"). For telecommunication operators wishing to offer TV services, a popular choice is to utilize so called IPTV, which delivers a TV service over IP and the customer's broadband connection (e.g. ADSL, VDSL, Public Ethernet, etc.).

With the convergence between IPTV services and the IMS infrastructure, a new range of possibilities opens up for an end user to utilize their TV set. For example, videoconferencing, interactive gaming, personalized advertisement or interactive TV programmes with viewers' feedback are easily achievable using IMS.

In order to be able to view IPTV broadcasts, the end user requires a device that can receive IPTV media, such as a set top box (STB), that may or may not be IMS enabled or have SIP functionality. Means are required to enable the establishment of an RTP media session, such as an IPTV media session, from the IMS network to a device such as a STB for displaying the RTP media content.

"Access Networks Assumptions for TISPAN RACS NGN@Home Proposal" (ETS TIPAN#06Bis 06bt056r1) describes a general model and functional architectural model for a Home Residential Gateway.

WO 02/09387 proposes a network system, comprising a first and a second network, a network control device located in the first network and a network address translation device (NAT or NAT-PT) located at a border between the first network and the second network; wherein the network control device and the network address translation device are adapted to exchange commands of a special control protocol, the network control device is adapted to effect address translation of addresses included in the payload of a data packet by sending a command of the special control protocol to the network address translation device, and the network address translation device is adapted to translate the address received by the command of the special control protocol and to forward a command of the special control protocol including the translated address to the network control device.

### Summary

Signalling required to establish a unicast media session, such as Real-time Transport Protocol and Real Time Streaming Protocol signalling, generally includes an exchange of source and destination addresses and ports. A media receiver, such as a Set Top Box, must transmit its IP address and port number when communicating with the source of the unicast media data, in order that the media data is delivered to the correct location, and vice versa. A Network Address Translation (NAT) function, used to translate an IP address, or a Network Address and Port Translator (NAPT), used to translate both the address and the port number, is interposed between the source and the receiver. Where a NAT or NAPT is used, the IP address and port number provided by the media receiver to the media source will not identify the media receiver, and so the unicast media data cannot be delivered to the correct location. This is because the media receiver will include, in the setup signalling, its own local IP address and port number on the media receiver's side of the NAT function, which is different from the IP address and port number on the media source side of the NAT function.

According to a first aspect of the invention, there is provided a method of establishing a unicast media session between a media receiver and a media source via a Network Address Translation function and a Home IP Multimedia Subsystem Gateway, the media source being within an IP Multimedia Subsystem, the method comprising:
using a Session Initiation Protocol INVITE method between a media source controller within the IP Multimedia Subsystem and the media receiver to identify the media source to the media receiver;
receiving, at the media receiver, Network Address Translation bindings for the unicast media session, sent from the Home IP Multimedia Subsystem Gateway; and
establishing a unicast media session between the media receiver and the media source using the Network Address Translation bindings.

In the present specification, the term Network Address Translation is used to cover both a NAT function and a NAPT.

Preferably, the Network Address Translation function is disposed at a Residential Gateway.

The unicast media session may be an IPTV media session.

The unicast media session may be a Real-time Transport Protocol media session, and it may further be established using Real Time Streaming Protocol.

It is preferred that the media receiver comprises a Set Top Box. The media receiver may further comprise a Home IP Multimedia Subsystem Gateway coupled to the Set Top Box.

The method may comprise sending the SIP INVITE message from an IPTV Application Server in response to a request message sent from user equipment to the IPTV Application Server.

Preferably, the method comprises communicating between the media receiver and the media source via an IPTV Application Server.

According to a second aspect of the invention, there is provided a Home IP Multimedia Subsystem Gateway comprising:
a first interface for communicating with a remote network, the remote network comprising a media source, and for receiving a SIP INVITE from the media source to identify the media source to a non-IP Multimedia Subsystem enabled device;
a second interface for communicating with the non-IP Multimedia Subsystem enabled device;
means to obtain Network Address Translation bindings for a unicast service sent from the media source;
means to provide the Network Address Translation bindings to the non-IP Multimedia Subsystem enabled device.

According to a third aspect of the invention, there is provided a media receiver comprising:
an interface for communicating with a remote network, the remote network comprising a media source;
means to obtain, from a Home IP Multimedia Subsystem Gateway, Network Address Translation bindings for a unicast service sent from the media source.
means to establish a unicast media session between the media receiver and a media source using the Network Address Translation bindings.

It is preferred that the means to establish a unicast media session use Real Time Streaming Protocol.

### Brief Description of the Drawings

Figure 1A illustrates schematically a Home IMS Gateway comprising an IMS Service Gateway within a home network;
Figure 1B illustrates schematically the control plane and the media plane for the scenario of Figure 1A.
Figure 2 illustrates services and actions of inbound SIP INVITE handling where an STB is located on a home network; and
Figure 3 illustrates signalling to establish a Real-time Transport Protocol session.

### Detailed Description

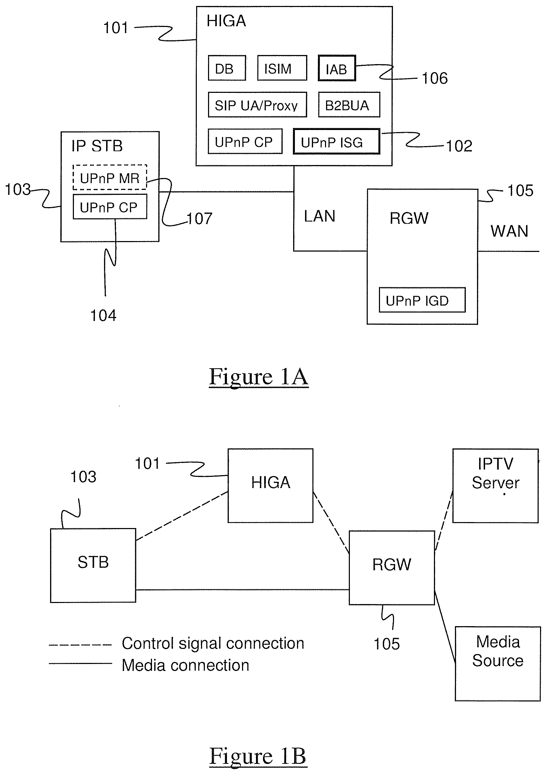

Referring to Figure 1A, a Set Top Box (STB) 103 for receiving IPTV signals is provided within the home. The STB is coupled to a Local Area Network (LAN). The STB 103 of Figure 1 is not IMS-enabled, but is a Universal Plug and Play (UPnP) device. As the STB 103 is not IMS-enabled, it cannot communicate directly with a media source from a remote IMS network.

The STB 103 comprises a UPnP Control Point (CP) 104, which allows the STB 103 to receive and register services available from other devices on the LAN.

The STB 103 further comprises a UPnP Media Renderer (MR) 107, which enables the STB to render media content such as video. The MR 107 provides a set of rendering controls in which the UPnP CP can control how the media content is rendered by the STB, including control for various features such as volume, brightness, sharpness etc.

A Residential Gateway (RGW) 105 is connected between the LAN and an access network. The RGW is a device that is used to connect multiple devices on the LAN to a single cable or DSL line for service access, including e.g. IPTV and Internet access. In order to allow service access to more than one device on the LAN, the RGW 105 has NAT functionality. The STB 103 communicates with remote devices outside the LAN via the RGW 105.

In order to allow the non-IMS enabled STB 103 to communicate with a remote IMS network, a Home IMS Gateway (HIGA) 101 is also disposed in the LAN. The HIGA 101 is disposed in a control plane of the LAN. The HIGA 101 implements a range of functions to assist inter-working between IMS and non-IMS enabled device 103 on the LAN.

The HIGA comprises an IMS Service Gateway (ISG) 102, which is preferably implemented in the same physical box as the HIGA 101. The UPnP ISG device 102 is a logical entity that advertises a set of communication services to a UPnP device 103 on the LAN. The UPnP ISG device 102 introduces the IMS and SIP services. Each of the communication services advertised by the ISG 102 allows non-IMS enabled UPnP devices to establish media connections with remote SIP or IMS clients by invoking the relevant UPnP actions in the ISG 102. Many different types of action are possible, depending on the function of the non-IMS enabled UPnP device. For example, for a STB, an access content action is provided to enable the STB on the LAN to access multimedia content such as IPTV stored in the remote IMS system.

The ISG 102 uses the UPnP protocol to communicate with other devices on the LAN. It advertises its presence on the LAN by sending a discovery advertisement message: Device available -- NOTIFY with ssdp:alive. The message is sent as a multicast over User Datagram Protocol (UDP) to a standard address and port. Control points within the devices on the LAN listen to this port to detect when new capabilities are available on the LAN. To advertise the full extent of its capabilities, the ISG device 102 multicasts a number of discovery messages corresponding to the services available. The UPnP ISG advertises the remote SIP and IMS services and this is registered by the UPnP Control Points of the STB 103.

The UPnP description for the ISG device 102 is partitioned into two parts; the device description describes properties of the HIGA, while the "service description" describes the services available via the HIGA. The "device description" lists basic properties of the HIGA as well as all services it supports.

The HIGA further comprises a UPnP Control Point (CP), a logical entity that controls device points; that is to say, the UPnP CP retrieves a description and list of available services of the UPnP devices on the LAN such as the STB 103 or the RGW 105.

The HIGA also comprises an IMS Address Book (IAB) 106 to facilitate communication between non-IMS enabled devices on the LAN and remote IMS services. The IAB 106 includes a database of addresses.

A SIP User Agent (SIP UA) is also provided which allows the HIGA 101 to work with the Session Initiation Protocol for initiating IMS sessions.

The HIGA 101 may be implemented in a separate physical box or integrated in any other box in the home, e.g. the Residential Gateway (RGW) 105 or the STB 103.

Referring to Figure 1B, there is illustrated schematically the control plane and the media plane for this embodiment. Control plane signalling passes between an IPTV application server and the STB 103 via the HIGA 101 and the RGW 105. The media plane passes between the media source and the STB 103 via the RGW 105.

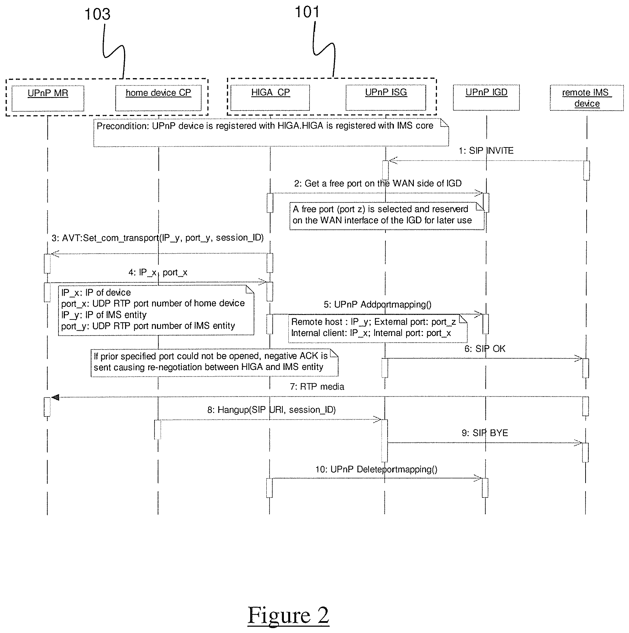

Referring to Fig. 2, there are illustrated services and actions of inbound SIP INVITE handling in the case of a non-IMS enabled STB 103. It is a precondition that the STB 103 is registered with the HIGA 101, and the HIGA 101 is registered with the IMS core. For incoming SIP INVITE messages establishing an IPTV media session, appropriate UDP ports must be opened in the residential gateway (RGW) 105 for the RTP media. The SIP INVITE in message 1 triggers a sequence of actions (2-5). These actions lead to the creation of a Network Address Translation (NAT) binding for RTP media in the RGW. The sequence of actions is as follows:
1. A SIP invite is received from a remote IMS device. Where the SIP invite is for initiating an IPTV media session, the remote IMS device is an IMS video Application Server.
2. On receipt of the SIP invite at the ISG 102, the Internet Gateway Device (IGD) in the RGW 105 reserves a free UDP port in the IGD.
3. A UPnP action at the STB media renderer 107 is invoked, which passes the port number of the remote IMS device as the source port of media to the RTP stack in the Media Renderer device 107. The UPnP action is preferably included in the AVTransport service. This action informs the RTP stack of the media renderer of the IP address and port of the video source. The syntax of the action is as follows:
   *IP,port Set_com_transport(IP', port', ID)*
      IP: IP address of STB on the LAN
      IP': IP address of the remote IMS device
      Port: Port number on which the STB is ready to receive RTP
      Port': Port number on which the remote IMS device is ready to receive RTP
      ID: unique identifier of the session which is assigned by the HIGA
4. The RTP stack of the media renderer 107 returns the UDP port on which the client application is ready to receive media.
5. The logic in the UPnP gateway device invokes an Addportmapping action, which creates a NAT binding between the remote media source and the STB. IP-y in Figure 2 refers to the IP address of the remote media source and IP_x refers to the IP address of the STB.
6. The SIP OK message is sent to the remote IMS device, which triggers RTP media to be sent to the media renderer 107 of the STB 103 from the remote IMS client.
7. RTP media is sent to the media renderer 107 of the STB 103 from the remote IMS device, e.g. a Streaming Server (SS).
8. When the user wishes to terminate the IPTV session, termination is initiated via the UPnP Hangup action. A session ID is passed from the STB 103 via an internal message.
9. The UPnP Hangup action triggers a SIP BYE to be sent to the remote IMS device informing the remote IMS device of session termination.
10. The NAT binding for the session is removed.

### RTSP session setup

According to a second embodiment, an STB 108 is IMS enabled and need not be registered with a HIGA. However, means are still required to allow an IPTV session to be established with the STB 108, as signalling between the STB 108 and the media source traverses a NAT function disposed at an RGW. When it is required to establish an RTP media session with an IMS enabled STB 108, in combination with RTSP for media control, the NAT traversal for the IPTV media must be set up. For example, where TV content is ordered from an IPTV Application Server (IPTV AS) using another IMS device such as a mobile phone, the media content can then be played out on a UPnP and IMS enabled media renderer device such as a STB 108.

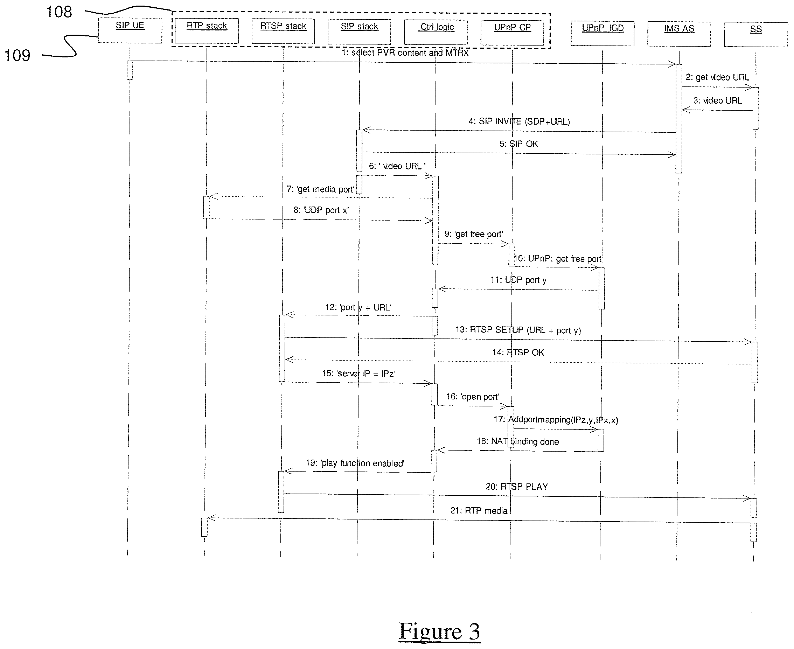

An STB 108 may use protocols other than SIP to negotiate the media ports. In an IPTV scenario, the media session setup in the STB 108 may be carried out using the RTSP protocol. Figure 3 illustrates signalling to set up a Real-Time Streaming Protocol (RTSP) session. In this scenario, the session is initiated by User Equipment 109, although it will be appreciated that similar signalling can be used for a session initiated either by the remote media source or by the STB 108. The signalling is as follows:
1. The user selects the desired media content and specifies the identity of the play device, in this case the STB 108 on the LAN. A request message is sent from User Equipment 109, such as a mobile telephone, to an IPTV AS via a secure TCP/TLS connection with the IPTV AS.
2. Based on the user selection of a relevant URL, the required video content is requested from a SS.
3. The video URL is returned from the SS to the IPTV AS in form of an RTSP URL.
4. The IPTV AS sends a SIP INVITE message to the SIP stack of the STB 108. The SIP INVITE message contains the RTSP URL and a media description of the video content. The control logic module of the STB 108 enables the coordination of the interaction between the different protocol stacks.
5. A SIP OK response is sent back from the STB 108 to the IPTV AS.
6. The INVITE message received by the SIP stack triggers a message containing the video URL to be sent to the control logic.
7. A request is made to the RTP stack of the STB 108 for the UDP port on which it is ready to receive media.
8. The RTP stack returns a UDP port number for RTP media.
9. A request for the initiation of a UPnP action to get a free IGD UDP port is made.
10. A request for a free UDP port on the WAN side of the IGD is made via UPnP.
11. A free UDP port on the WAN side of the IGD, port y, is returned.
12. The identity of a UDP port y on the IGD, and the RTSP URL to the video are communicated to the RTSP stack.
13. An RTSP SETUP message is sent to the SS indicating the receiving media port. The receiving media port is the negotiated UDP port on the IGD WAN interface. For security reasons, the SS may be inaccessible to end user devices. In this case, all RTSP communication with the end user RTSP client is carried out explicitly with the IPTV AS via a secure channel. The IPTV AS then forwards the RTSP messages to the SS. Messages from the SS to the RTSP client are also sent via the AS.
   An alternative to media negotiation using SIP is to use RTSP DESCRIBE. In this instance, the DESCRIBE message is sent prior to message 13, but the control logic must first pass the client port number to the RTSP stack.
14. The SS receives the SETUP message from the RTSP stack and responds with an RSTP OK message.
15. The RTSP OK message, sent from the SS to the RTSP stack, triggers an internal message to be sent to the control logic specifying the IP address of the SS.
16. The control logic sends an internal message requesting the creation of a NAT binding.
17. A UPnP action Addportmapping creates a NAT binding in the IGD.
18. An internal message is sent from the IGD to the control logic of the STB 108, notifying the control logic that the NAT binding is created.
19. An internal message is sent from the control logic to the RTSP stack informing it of the "play ready" status of the video content. Prior to this message, the play function of the STB is disabled, and becomes enabled on receipt of this internal message.
20. Depending upon the user input, the RTSP stack requests video content to be streamed by sending RSTP play command to the SS.
21. The RTP stream is sent to the prior specified IGD IP address and port where it is translated to the local IP and UDP port of the RTP stack of the STB 108.

The commands in messages 6, 7, 9, 12, 15, 16 and 19 of Fig. 3 are internal messages between the STB control logic and the various protocol stacks of the STB. The control logic provides an event driven mechanism to exchange data between the different protocol stacks.

In an alternative embodiment, the IMS-enabled STB 108 initiates the IPTV session. The user selects the desired video content from, for example, a web portal having a list of URLs, each URL directed to different video content or different IPTV Application Servers. A SIP INVITE is sent from the STB 108 to the IPTV AS, and the IPTV AS returns a SIP OK message. In this embodiment, the SIP OK message rather than the SIP INVITE message contains the SDP and the URL.

It will be apparent to one skilled in the art that various modifications may be made to the embodiments described above without departing from the scope of the present invention. For example, the ISG is described as being implemented within the HIGA, although it is possible to dispose an ISG at other points in the LAN and not necessarily with the HIGA.

## Claims

1. A method of establishing a unicast media session between a media receiver and a media source via a Network Address Translation function and a Home IP Multimedia Subsystem Gateway, the media source being within an IP Multimedia Subsystem, the method comprising:
using a Session Initiation Protocol INVITE method between a media source controller within the IP Multimedia Subsystem and the media receiver to identify the media source to the media receiver;
the method **characterized by**, receiving, at the media receiver, Network Address Translation bindings for the unicast media session, sent from the Home IP Multimedia Subsystem Gateway; and
establishing a unicast media session between the media receiver and the media source using the Network Address Translation bindings.

2. A method according to claim 1, wherein the Network Address Translation function is disposed at a Residential Gateway.

3. A method according to claim 1 or 2, wherein the unicast media session is an IPTV media session.

4. A method according to claim 1, 2 or 3, wherein the unicast media session is a Real-time Transport Protocol media session.

5. A method according to any one of the preceding claims, wherein the unicast media session is established using Real Time Streaming Protocol.

6. A method according to any of the preceding claims, wherein the media receiver comprises a Set Top Box.

7. A method according to claim 6, wherein the media receiver further comprises a Home IP Multimedia Subsystem Gateway coupled to the Set Top Box.

8. A method according to any of the preceding claims, comprising sending the SIP INVITE message from an IPTV Application Server in response to a request message sent from user equipment to the IPTV Application Server.

9. A method according to any of the preceding claims, comprising communicating between the media receiver and the media source via an IPTV Application Server.

10. A Home IP Multimedia Subsystem Gateway (101 comprising:
a first interface for communicating with a remote network, the remote network comprising a media source, and for receiving a SIP INVITE from the media source to identify the media source to a non-IP Multimedia Subsystem enabled device (103);
a second interface for communicating with the non-IP Multimedia Subsystem enabled device (103);
means to obtain Network Address Translation bindings for a unicast service sent from the media source;
means to provide the Network Address Translation bindings to the non-IP Multimedia Subsystem enabled device (103).

11. A media receiver (103; 108) comprising:
an interface for communicating with a remote network, the remote network comprising a media source;
means to obtain, from a Home IP Multimedia Subsystem Gateway (101), Network Address Translation bindings for a unicast service sent from the media source,
means to establish a unicast media session between the media receiver and a media source using the Network Address Translation bindings.

12. A media receiver (103; 108) according to claim 11, wherein the means to establish a unicast media session uses Real Time Streaming Protocol.

## Patentansprüche

1. Verfahren zum Einrichten einer Unicast-Mediensitzung zwischen einem Medienempfänger und einer Medienquelle über eine Netzwerkadressenübersetzungsfunktion und einen IP-Multimediasubsystem-Heimgateway, wobei die Medienquelle innerhalb eines IP-Multimediasubsystems ist, wobei das Verfahren umfasst:
Verwenden eines Sitzungseinleitungsprotokoll-INVITE-Verfahrens zwischen einem Medienquellencontroller innerhalb des IP-Multimediasubsystems und dem Medienempfänger, um die Medienquelle für den Medienempfänger zu identifizieren;
wobei das Verfahren **gekennzeichnet ist durch** im Medienempfänger erfolgendes Empfangen von Netzwerkadressenübersetzungsbindungen für die Unicast-Mediensitzung, die vom IP-Multimediasubsystem-Heimgateway gesendet wurden; und
Einrichten einer Unicast-Mediensitzung zwischen dem Medienempfänger und der Medienquelle unter Verwendung der Netzwerkadressenübersetzungsbindungen.

2. Verfahren nach Anspruch 1, worin die Netzwerkadressenübersetzungsfunktion in einem Residential Gateway angeordnet ist.

3. Verfahren nach Anspruch 1 oder 2, worin die Unicast-Mediensitzung eine IPTV-Mediensitzung ist.

4. Verfahren nach Anspruch 1, 2 oder 3, worin die Unicast-Mediensitzung eine Echtzeittransportprotokoll-Mediensitzung ist.

5. Verfahren nach einem der vorhergehenden Ansprüche, worin die Unicast-Mediensitzung unter Verwendung des Echtzeit-Streamingprotokolls eingerichtet wird.

6. Verfahren nach einem der vorhergehenden Ansprüche, worin der Medienempfänger eine Settop-Box umfasst.

7. Verfahren nach Anspruch 6, worin der Medienempfänger ferner einen mit der Settop-Box gekoppelten IP-Multimediasubsystem-Heimgateway umfasst.

8. Verfahren nach einem der vorhergehenden Ansprüche, umfassend: Senden der SIP-INVITE-Nachricht von einem IPTV-Anwendungsserver als Antwort auf eine Anforderungsnachricht, die von einer Benutzereinrichtung an den IPTV-Anwendungsserver gesendet wurde.

9. Verfahren nach einem der vorhergehenden Ansprüche, umfassend: Kommunizieren zwischen dem Medienempfänger und der Medienquelle über einen IPTV-Anwendungsserver.

10. IP-Multimediasubsystem-Heimgateway (101), umfassend:
eine erste Schnittstelle zum Kommunizieren mit einem entfernten Netzwerk, wobei das entfernte Netzwerk eine Medienquelle umfasst, und zum Empfangen einer SIP-INVITE von der Medienquelle, um die Medienquelle für ein nicht IPmultimediasubsystembefähigtes Gerät (103) zu identifizieren;
eine zweite Schnittstelle zum Kommunizieren mit dem nicht IPmultimediasubsystembefähigten Gerät (103);
ein Mittel, um Netzwerkadressenübersetzungsbindungen für einen von der Medienquelle gesendeten Unicast-Dienst zu erlangen;
ein Mittel, um die Netzwerkadressenübersetzungsbindungen dem nicht IPmultimediasubsystembefähigten Gerät (103) bereitzustellen.

11. Medienempfänger (103; 108), umfassend:
eine Schnittstelle zum Kommunizieren mit einem entfernten Netzwerk, wobei das entfernte Netzwerk eine Medienquelle umfasst;
ein Mittel, um von einem IP-Multimediasubsystem-Heimgateway (101) Netzwerkadressenübersetzungsbindungen für einen von der Medienquelle gesendeten Unicast-Dienst zu erlangen;
ein Mittel, um eine Unicast-Mediensitzung zwischen dem Medienempfänger und einer Medienquelle unter Verwendung der Netzwerkadressenübersetzungsbindungen einzurichten.

12. Medienempfänger (103; 108) nach Anspruch 1, worin die Mittel, um eine Unicast-Mediensitzung einzurichten, das Echtzeit-Streamingprotokoll verwenden.

## Revendications

1. Procédé d'établissement d'une session de média à diffusion individuelle entre un récepteur de média et une source de média via une fonction de transposition d'adresse de réseau et une passerelle de sous-système multimédia IP domestique, la source de média étant à l'intérieur d'un sous-système multimédia IP, le procédé comprenant :
l'utilisation d'un procédé INVITE de protocole d'initiation de session entre un contrôleur de source de média à l'intérieur du sous-système multimédia IP et le récepteur de média de manière à identifier la source de média pour le récepteur de média,
le procédé étant **caractérisé par :**
la réception, au niveau du récepteur de média, de liens de transposition d'adresse de réseau pour la session de média à diffusion individuelle, qui sont envoyés depuis la passerelle de sous-système multimédia IP domestique ; et par
l'établissement d'une session de média à diffusion individuelle entre le récepteur de média et la source de média en utilisant les liens de transposition d'adresse de réseau.

2. Procédé selon la revendication 1, dans lequel la fonction de transposition d'adresse de réseau est disposée au niveau d'une passerelle résidentielle.

3. Procédé selon les revendications 1 ou 2, dans lequel la session de média à diffusion individuelle est une session de média IPTV.

4. Procédé selon les revendications 1, 2 ou 3, dans lequel la session de média à diffusion individuelle est une session de média de protocole de transport en temps réel.

5. Procédé selon l'une quelconque des revendications précédentes, dans lequel la session de média à diffusion individuelle est établie en utilisant un protocole de diffusion en continu en temps réel.

6. Procédé selon l'une quelconque des revendications précédentes, dans lequel le récepteur de média comprend un boîtier décodeur.

7. Procédé selon la revendication 6, dans lequel le récepteur de média comprend en outre une passerelle de sous-système multimédia IP domestique qui est couplée au boîtier décodeur.

8. Procédé selon l'une quelconque des revendications précédentes, comprenant l'envoi du message INVITE de SIP depuis un serveur d'application IPTV en réponse à un message de requête qui est envoyé depuis un équipement d'utilisateur au serveur d'application IPTV.

9. Procédé selon l'une quelconque des revendications précédentes, comprenant la communication entre le récepteur de média et la source de média via un serveur d'application IPTV.

10. Passerelle de sous-système multimédia IP domestique (101) comprenant :
une première interface pour communiquer avec un réseau à distance, le réseau à distance comprenant une source de média, et pour recevoir un message INVITE de SIP depuis la source de média de manière à identifier la source de média pour un dispositif validé de sous-système multimédia non IP (103) ;
une seconde interface pour communiquer avec le dispositif validé de sous-système multimédia non IP (103) ;
un moyen pour obtenir des liens de transposition d'adresse de réseau pour un service à diffusion individuelle qui est envoyé depuis la source de média ;
un moyen pour fournir les liens de transposition d'adresse de réseau au dispositif validé de sous-système multimédia non IP (103).

11. Récepteur de média (103 ; 108) comprenant :
une interface pour communiquer avec un réseau à distance, le réseau à distance comprenant une source de média ;
un moyen pour obtenir, depuis une passerelle de sous-système multimédia IP domestique (101), des liens de transposition d'adresse de réseau pour un service à diffusion individuelle qui est envoyé depuis la source de média ;
un moyen pour établir une session de média à diffusion individuelle entre le récepteur de média et une source de média en utilisant les liens de transposition d'adresse de réseau.

12. Récepteur de média (103 ; 108) selon la revendication 11, dans lequel le moyen pour établir une session de média à diffusion individuelle utilise un protocole de diffusion en continu en temps réel.
